(19) Europäisches Patentamt
European Patent Office
Office européen des brevets

(11) Publication number: **0 425 424 A2**

# (12) EUROPEAN PATENT APPLICATION

(21) Application number: **90630147.8**

(22) Date of filing: **30.08.90**

(51) Int. Cl.$^5$: **C08J 3/00**, C08J 5/24, //C08L63:00

The title of the invention has been amended (Guidelines for Examination in the EPO, A-III, 7.3).

(30) Priority: **31.08.89 US 401196**

(43) Date of publication of application: **02.05.91 Bulletin 91/18**

(84) Designated Contracting States: **DE FR GB**

(71) Applicant: **UNITED TECHNOLOGIES CORPORATION**
**United Technologies Building 1, Financial Plaza**
**Hartford, CT 06101(US)**

(72) Inventor: **Scola, Daniel A.**
**83 Stonepost Road**
**Glastonbury, Connecticut 06033(US)**
Inventor: **Pinto, Jane P.**
**184 Weir Street**
**Glastonbury, Connecticut 06033(US)**

(74) Representative: **Schmitz, Jean-Marie et al**
**OFFICE DENNEMEYER S.à.r.l. P.O. Box 1502**
**L-1015 Luxembourg(LU)**

## (54) Method for fabricating graphite fiber epoxy composites.

(57) A pretreatment process for fabricating graphite fiber epoxy composites preforms from epoxy resin. The pretreatment process comprises the step of heating an epoxy resin mixture to an elevated temperature for a period of time necessary to form a stabilized material, yet retaining a sufficient exotherm, the exotherm being necessary to lower the viscosity upon subsequent consolidation and cure. This reduces the in-press fabrication time of the stabilized material upon subsequent cure. Processes are also disclosed for the subsequent cure of the stabilized epoxy resin mixture to form an advanced graphite fiber/epoxy composite.

FIG. 1

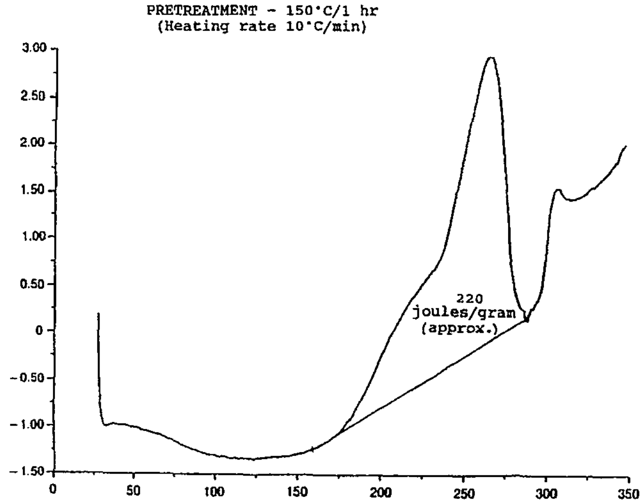


EP 0 425 424 A2

## TECHNICAL FIELD

The present invention relates to a means for fabricating advanced graphite fiber epoxy composites.

### Background Art

The manufacture of graphite epoxy composite material is typically accomplished in an autoclave at about 200 psi and at temperatures ranging from 121 °C (250 °F) to 204 °C (400 °F), or, in the alternative, in a press at pressures and temperatures ranging from about 200 to 2000 psi and 149 °C (300 °F) to 204 °C (400 °F), respectively. The autoclave technique allows for many components to be processed at one time whereas compression molding is limited to the fabrication of one or two items at a time. Because the residence time in the compression press can be as long as two hours, the number of composite items processed in one day is minimal.

In addition, composites fabricated by conventional techniques can possess voids. Voids are undesirable because they tend to detract from the appearance, physical properties and thermal oxidative stability characteristics of these composites. As such, overall yield and long term reliability of such composite systems is reduced as composite fabrication costs increase.

Thus, a need exists to convert such graphite/epoxy systems into chemically reactive composite preforms which are capable of undergoing compression molding in a press at the higher temperatures required for consolidation and final cure in a shorter period of time. In this manner, composite fabrication costs can be dramatically reduced by fabricating multiple preforms in a mold by an autoclave process and following such fabrication by a compression molding process of multiple preforms in one cycle.

### Disclosure of the Invention

Accordingly, it is an object of the present invention to provide a means for fabricating stable partially advanced epoxy resin composites, such composites capable of undergoing subequent cure in a shorter period of time.

Another objective is to reduce composite fabrication costs while still producing graphite fiber/epoxy composites of excellent quality and reproducibility.

The method comprises the step of heating an epoxy resin mixture to an elevated temperature for a period of time necessary to form a stabilized material, yet retaining a sufficient exotherm, the exotherm being such that the heat generated upon subsequent processing will lower the viscosity of the stabilized material upon subsequent consolidation and cure. This reduces the in-press fabrication time of the stabilized material upon subsequent cure.

A further aspect of the present invention includes methods for making an advanced graphite fiber epoxy resin composite article, wherein the article has a shorter in-press time during this subsequent cure.

A first method for making the article comprises heating a plurality of plies of epoxy resin according to the above method to form a stabilized material, stacking the plies of stabilized epoxy resin material to form a laminated stabilized epoxy resin material, and curing the laminated stabilized epoxy resin material to form the article.

A second method for making the article comprises stacking a plurality of plies of epoxy resin to form a laminated epoxy resin, heated the laminated epoxy resin according to the above method to form a stabilized laminated epoxy resin material, and curing the stabilized laminated epoxy resin material to form the article.

The foregoing and other features and advantages will become more apparent from the specification and claims.

### Brief Description of the Drawings

Figure 1 is a differential scanning calorimetry (DSC) curve illustrating the heat of reaction as a function of time for F-263 epoxy resin sample pretreated at 150 °C for 1 hour.

Figure 2 is a differential scanning calorimetry (DSC) curve illustrating the heat of reaction as a function of time for F-263 epoxy resin sample pretreated at 150 °C for 1 and 1/2 hours.

Best Mode for Carrying Out the Invention

In the present invention, any epoxy resin can be used as a matrix in the production of advanced fiber reinforced composites. Simply stated, epoxy resins are thermosetting resins based on the reactivity of the epoxide group. This epoxide is an organic compound containing a reactive group resulting from the union of an oxygen with two other atoms (usually carbon).

One type of epoxy resin, typically known as a series of condensation products by its trademark EPON (TM) resins (Shell Chemical Co., Houston, TX), is made from the polymerization of epichlorohydrin and bisphenol-A. In addition, aliphatic polyols such as glycerol may be used instead of the aromatic bisphenol-A. Molecules of this type have glycidyl ether structures in the terminal positions and cure readily with amines. A tetra functional epoxy manufactured from 4,4′-methylenedianiline and epichlorohydrin is another example of a commercially available epoxy.

Another type is made from polyolefins oxidized with peracetic acid. These have more epoxide groups within the mole-cule as well as in terminal positions and can be cured with anhydrides at high temperatures. Still another type of epoxy resin is made by the reaction of epichlorohydrin with a novolac resin (phenol or cresol formaldehyde) and is referred to as epoxy novolac. These epoxy resins are typically available through numerous commercial manufacturers. For example, the Bisphenol A-type, the tetrafunctional type, and the epoxy novolac are manufactured by Shell Chemical Company (Houston, Texas), Ciba-Geigy Corp. (Ardsley, New York) and Dow Chemical Company (Midland, Michigan), respectively.

Modifications of the above epoxy resins are also made commercially, such modifications being known to those skilled in the art.

Epoxy resins exemplified in the present invention are typically represented by the following structures.

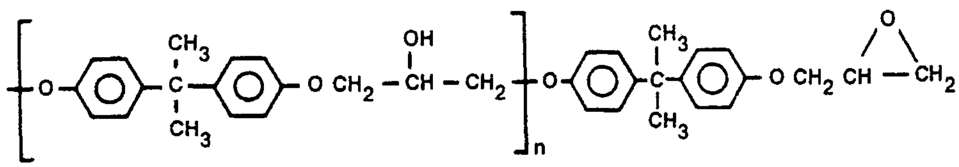

EPON 828

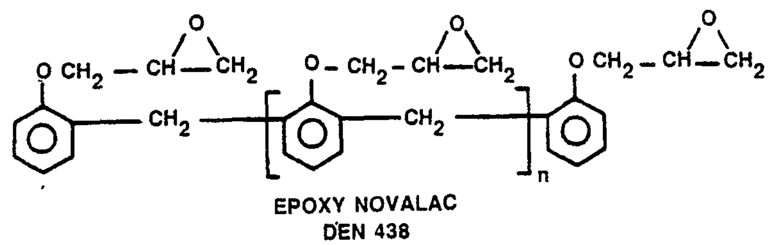

EPOXY NOVALAC
DEN 438

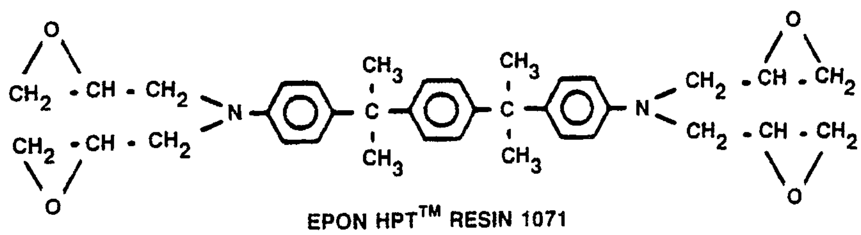

EPON HPT™ RESIN 1071

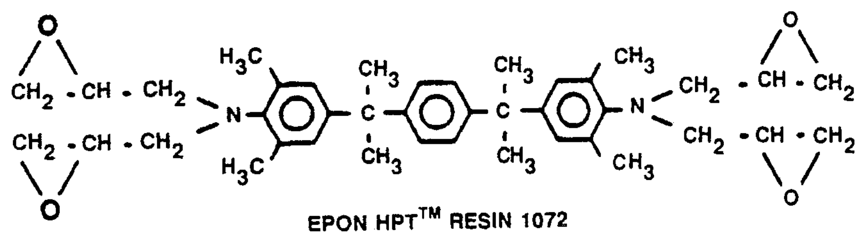

EPON HPT™ RESIN 1072

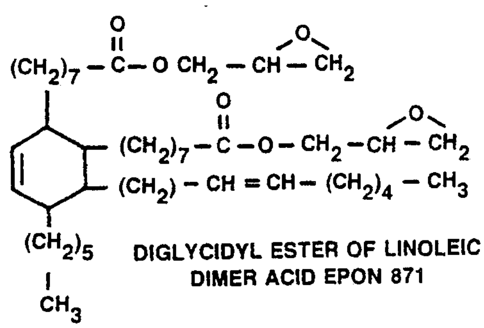

DIGLYCIDYL ESTER OF LINOLEIC
DIMER ACID EPON 871

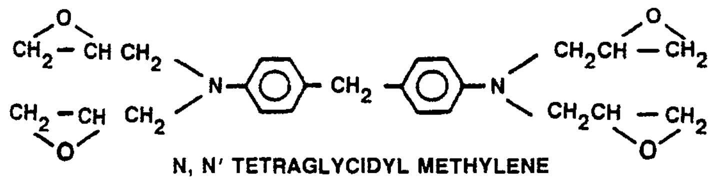

N, N' TETRAGLYCIDYL METHYLENE DIANILINE MY 720

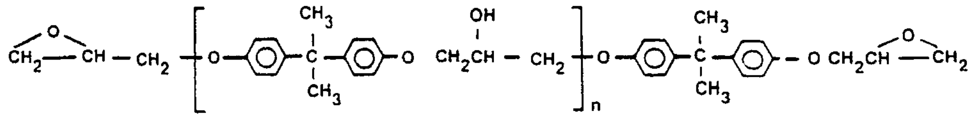

EPON 828

PLUS

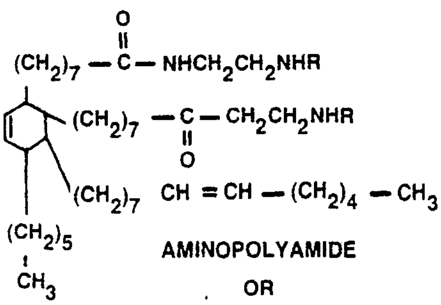

AMINOPOLYAMIDE

+

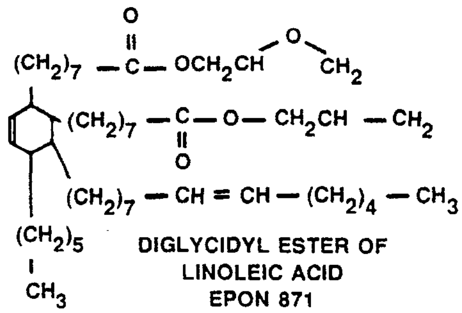

DIGLYCIDYL ESTER OF LINOLEIC ACID EPON 871

OR

POLY SULFIDE

$HS(CH_2CH_2OCH_2OCH_2CH_2SS)_n - CH_2CH_2OCH_2OCH_2CH_2SH$

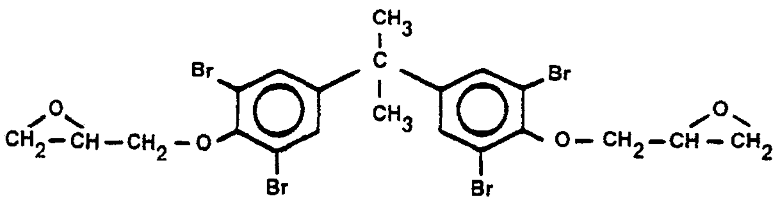

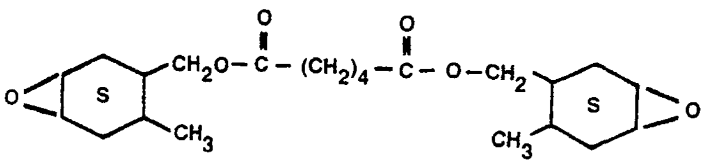

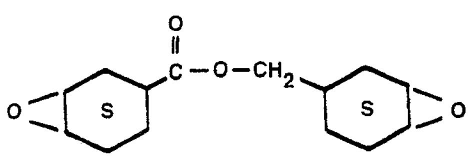

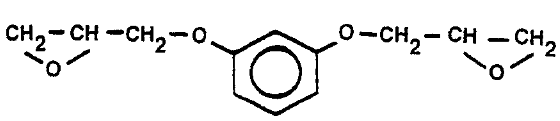

Other examples include brominated epoxy resins such as DER® 511, 534, 542, and 580 epoxy resin (Dow Chemical Company, Midland, Michigan) and Celanese 5063, 5163 and 5183 epoxy resin available from Celanese Chemical Company (New York, New York).

A preferred class of epoxy resin is made from Bisphenol A epoxy and the tetrafunctional epoxide of 4,4′-methylenedianiline, and epoxy novolac because of the improved modulus and moisture resistance found over more conventional bisphenol A-type epoxies. Especially preferred is the tetrafunctional epoxide of 4,4′-methylenedianiline, a modifying epoxy, 4,4′-diaminodiphenylsulfone, and boron trifluoride ($BF_3$)

monoethylamine (hereinafter referred to as F-263) because it yields an epoxy resin with a stiffness of approximately .5 x $10^5$ psi and a glass transition (Tg) temperature between about 170 °C and 200 °C, such properties desirable for high temperature applications, sure as aerospace and the like.

The epoxy resins used in the present invention can be cured by various curing agents, amines, anhydrides, carboxylic acids, amides and various other latent curing agents. These curing agents are conventional to those skilled in the art. For example, anhydride and carboxylic acid curing agents include nadic anhydride, hexahydrophthalic anhydride, phthalic acid, methylhexahydrophthalic anhydride and chlorendic anhydride. Typical amine epoxy curing agents include 3,3′ or 4,4′-diaminodiphenylsulfone, 4,4′-methylenedianiline, meta-phenylene diamine and mixtures of aromatic amines including 4,4′-methylenedianiline. Amides and other latent curing agents include hydroxymethylurea, dialkylsubstituted ureas dicyandiamide, 2-ethyl-4-methylimidozole, and 2 heptadecylimidazole.

In addition, epoxy resins cured by the above-mentioned agents can be accelerated by the addition of various accelerators and catalysts, e.g. boron trifluoride monoethyl amine, N,N-dimethylaniline, resorcinol, tris-dimethylaminophenol tin octoate, dimethylbenzylamine, as well as modified by various tougheners and diluents, e.g. epoxidized polybutadiene, butadiene diepoxide, carboxy terminated butadiene-acrylonitrile (CBTN), amine terminated butadiene-acrylonitrile (ABAN).

Various combinations of epoxy resins, curing agents, accelerators and modifiers are used in the fabrication of advanced fiber reinforced composites. The quantities and types of these materials and combinations thereof, control the curing rate, the curing temperature and the final properties of the end products. The curing agent, accelerator, etc., may be added to a base epoxy resin at any desired level. However, for most purposes, these components will already be included in the resin at a percentage based on the base epoxy resin and are conventional to the art.

The fiber reinforcement in the process of the present invention may comprise graphite fibers, carbon fibers, glass fibers, refractory ceramic fibers or silicon carbide fibers. Graphite fibers are preferred for applications in which high modulus high strength fibers are required. Glass fibers are preferred in application in which lower modulus fibers are acceptable. Woven fiber cloth, unidirectional fiber tapes or fiber rovings are impregnated with the solution of reaction mixture, i.e., epoxy resin, curing agent, etc., and the solvent is evaporated to form the "prepreg". The epoxy may also be applied by a hot melt process. Composite articles made by the process of the present invention typically include between about 30 volume percent and about 60 volume percent fiber reinforcement.

It is believed that heating the epoxy resin mixture produces time dependent rheological and chemical changes in the reaction mixture. The energy changes due to these transformations are typically followed by the heat absorbed (endotherm) or heat liberated (exotherm) during the heating process. Of particular interest is the exotherm generated during the cure of a partially advanced epoxy resin, such exotherm being critical in lowering the viscosity on reheat in a compression molding process.

For example, samples of F-263 epoxy resin available from Hexcel Company (Dublin, California) were initially pretreated using two different processes, one at 150 °C for 1 hour, the other at 150 °C for 1.5 hours. The samples were subjected to differential scanning calorimetry (DSC) to determine their heat of reaction $\Delta H_a$, or reaction exotherm, as shown in Figures 1 and 2. The scans illustrate the energetics of the samples (y-axis) as a function of temperature (x-axis). As indicated in Fig. 1, the sample pretreated at 150 °C/1 hr (heating rate of 10 °C/minute) generated an additional heat of reaction of 220 Joules/gram, this exotherm being available for further processing. In other words, 55% of the heat of reaction available from an unstaged, i.e. no pretreatment, sample (400 Joules/gram) is residual. In comparison, Fig. 2 indicates that only 35% of the original heat of reaction is available for further processing after being pretreated at 150 °C/1.5 hrs (heating rate of 10 °C/minute).

The data reveals that after a certain period of time, the resin mixture will no longer undergo an exothermic reaction and, as a result, further processing of the composite is prevented. This suggests that a critical temperature and time relationship exists for processing the epoxy resin mixture. This temperature/time relationship also becomes essential to the process for forming void free advanced composites on further processing.

The epoxy resin mixture, i.e epoxy resin base composition, curing agent, accelerator, various modifiers, etc., is heated to an elevated temperature and held at such temperature for a period of time. Elevated temperature means that temperature necessary to achieve a stabilized material yet retaining a sufficient exotherm for subsequent reheating.

By stabilized material is meant that minimal (i.e., less than 5%) additional advancement of the resin reaction is undergone while the material is waiting for further processing, i.e. on a shelf. This stabilization is important to achieve uniform product results despite differences in the prepreg history of various batches.

A sufficient exotherm corresponds to a residual reactivity, i.e. the remaining exotherm available after the

pretreatment process divided by the total heat of reaction generated by an unstaged/untreated sample, necessary to lower the viscosity of the resin upon reheating so that consolidation and final cure throughout the partially advanced epoxy resin can occur. A preferred residual reactivity is between about 40% and about 60%. Below this level of reactivity, an insufficient amount of heat will be generated in the reaction to sufficiently lower the viscosity for consolidation. Above this level of reactivity, too much heat will be generated causing excess flow of the resin. In this situation, articles produced have excessive fiber content and tend to be dry and less durable. A residual reactivity of about 50% is especially preferred because consolidation of the epoxy resin mass is achieved with a minimum, if not negligible, amount of voids.

Preferably, the epoxy resin mixture is heated from room temperature up to a temperature range from about 140° C to about 160° C. Above this temperature range, the remaining exotherm is insufficient to lower the viscosity. As a result, further processing is prevented or elsewise, composites having poor mechanical and chemical properties are formed. Below this temperature range, advancement of the system is a concern. The above temperature range is particularly adapted for use with the preferred epoxy resins previously mentioned. Similar epoxy resin systems will have corresponding temperature ranges. It is also known to one skilled in the art that this range may also vary depending on the quantities and kinds of curing agents, accelerators, etc. included with the base epoxy resin.

The epoxy resin mixture is maintained at this temperature range for a period of time sufficient to achieve the stabilized material capable of undergoing further consolidation/processing. The mixture is preferably advanced to such a level that press fabrication time is decreased without compromising the mechanical and thermal properties of the composite. A desired hold time for the preferred epoxy resin is between about 60 minutes to about 90 minutes because such times have been shown to produce composites with excellent qualities and reproducibility.

The epoxy resin mixture may be maintained at a temperature within the defined range under subatmospheric pressure so that volatile impurities and volatile reaction products can be removed from the resin during the heating process. If such a condition is employed, it is preferred that the subatmospheric pressure correspond to a vacuum of greater than about 200 mm of mercury because this will accelerate the rate of solvent release and any gas forming reactions. It is especially preferred that the subatmospheric pressure corresponds to a vacuum between 500 mm of mercury and 600 mm of mercury because under these conditions volatile release is are more complete.

The epoxy resin mixture is subsequently cooled to produce a stabilized molding material, i.e. a partially advanced epoxy resin analagous to a conventional "B-stage" fiber prepreg material which may be fully cured by further heating.

The partially advanced epoxy resin of the present invention may be consolidated and cured according to conventional vacuum bag or compression molding techniques to form a composite article. For example, a partially advanced epoxy resin of the present invention may be consolidated and cured by heating the resin in a press to a temperature between about 175° C and about 225° C under superatmospheric pressure maintained for a period between about 1/2 hour and 1 hour to form the advanced graphite fiber epoxy composite. It is preferred that a superatmospheric pressure between about 100 psi and about 500 psi be applied during the heating.

The following example is given to illustrate the method of the present invention. It is not, however, intended to limit the generally broad scope of the present invention.

## Example

Samples of CELION®6000 fiber (BASF, Parsippany, New Jersey) and F-263 resin (available from Hexcel Corporation, Dublin, California), a prepeg containing approximately 32 weight percent resin, were pretreated at 140° C/1 hr, 140° C/1.5 hrs, 150° C/1 hr and 160° C/0.5 hr. The rheological behavior of the heat pretreated prepreg over the temperature range of room temperature to 200° C was then determined as indicated in Table 1.

Table 1

| RHEOLOGICAL BEHAVIOR OF PRETREATED CELION 6000 fiber/F-263 PREPREG (heating schedule RT -> 200° C @ 2° C/min) | | | | |
|---|---|---|---|---|
| Prepreg Heat Treatment | Initial Vis.@ 50° C poise | Minimum Viscosity poise | Temp. @ Min. Visc. ° C | Gel. Temp. ° C |
| Untreated | $2.0 \times 10^5$ | $6.4 \times 10^4$ | 121 | 171 |
| 140° C/1 hr | $6.5 \times 10^5$ | $3.9 \times 10^4$ | 104 | 146 |
| 140° C/1.5 hrs | $2.0 \times 10^6$ | $1.7 \times 10^5$ | 95 | 112 |
| 150° C/1 hr | $7.3 \times 10^5$ | $1.1 \times 10^5$ | 126 | 152 |
| 160° C/.5 hr | $1.9 \times 10^6$ | $2.0 \times 10^5$ | 112 | 128 |

For the heating schedule, RT (room temperature) to 200° C at 2° C/min, the 1 hr 140° C and 150° C treated samples exhibit a minimum viscosity temperature which is 25° C to 40° C lower than the gelation temperature. The 1 hour 160° C treated sample, however, is only 16° C lower than the gelation temperature. It is essential that the minimum viscosity temperature be sufficiently lower than the gelation temperature to allow for consolidation before gelation. The 160° C treated material therefore represents a borderline case. As a result, based on the rheological measurements, either the 1 hour pretreatment at 140° C or at 150° C appears to be the preferred treatment.

As a result, the 150° C/1 hr preform exhibits sufficient residual flow and chemical reactivity. Based on the DSC and rheology investigations, the 150° C/1 hr pretreatment process was selected for additional process variability studies. Preforms were fabricated in vacuum and air at various pressures, and then subjected to a compression molding process at 200° C for 0.75 hour. The composition (resin, fiber and void volume), density, flexural properties and shear strength were then measured.

Optimization experiments to produce preforms with and without vacuum at 30 psi and 60 psi were performed. These optimization variables are listed in Table 2, while the results of these experiments are listed in Table 3. Based on void content and mechanical properties, all preform treatment processes showed improvement over the preform processes in which pressure was applied at room temperature in air or vacuum.

Table 2

| COMPOSITE PREFORM OPTIMIZATION STUDIES | | | |
|---|---|---|---|
| Process | Step 1 | Step 2 | Step 3 |
| 1 | Room temp. full vacuum | raise temp to 150 ° C, hold 30 min. | apply 30 psi, hold 30 min. |
| 2 | Room temp. full vacuum | raise temp to 150 ° C, apply 30 psi, hold 30 min. | |
| 3 | Room temp. full vacuum | raise temp to 150 ° C, hold 60 min. | apply 30 psi, |
| 4 | Room temp. full vacuum | raise temp to 150 ° C, hold 30 min. | apply 60 psi, hold 30 min. |
| 5 | Room temp. full vacuum | raise temp to 150 ° C, apply 60 psi, hold 60 min. | |
| 6 | Room temp. full vacuum | raise temp to 150 ° C, hold 60 min. | apply 60 psi, |

Table 3

| COMPOSITE FABRICATION PROCESS STUDIES (Final Composite Cure: 200° C/0.75 hr) | | | | | |
|---|---|---|---|---|---|
| Process | Composite Density g/cc | Short Beam Shear Strength ksi | Flexural Strength, ksi | Properties Modulus $10^6$ psi | Tg °C |
| 1 | 1.586 | 13.0 | 193 | 29.4 | 220 |
| 2 | 1.551 | 11.8 | 188 | 26.8 | 203 |
| 3 | composite delaminated on bonding | | | | |
| 4 | 1.548 | 11.9 | 278 | 17.4 | 210 |
| 5 | 1.595 | 16.7 | 281 | 18.2 | 210 |
| 6 | 1.533 | 12.1 | 287 | 17.0 | 210 |

These polymers make a significant advance in the field of high temperature polymers. Either as solid polymers, fibers, films or when incorporated into composites, they provide the strength needed at high temperatures. The polymers and composites made have high flexural strengths, tensile strength, strain to failure, compression strength, shear strength, and flexural fatigue.

The use of the pretreatment process in the present invention not only yields a stable material capable of additional processing, it also reduces the in-press fabrication time of such additional processing. As a result, fabrication costs are significantly reduced without sacrificing the physical and mechanical properties needed for such composite articles.

Although the invention has been shown and described with respect to a preferred embodiment, it will be understood by those skilled in the art that various changes in form and detail thereof may be made without departing from the spirit and scope of the claimed invention.

## Claims

1. A pretreatment process for fabricating graphite fiber/epoxy composite preforms from epoxy resin which comprises the steps of:
heating said epoxy resin mixture, said mixture comprising an epoxy resin base and reinforcing fibers, to an elevated temperature for a period of time necessary to form a stabilized material yet retaining a sufficient exotherm,
said exotherm being such that the heat generated upon subsequent processing will lower the viscosity of said stabilized material, said lowering necessary for consolidation and final cure;
thereby reducing the in press fabrication time of said material during a subsequent post cure cycle.
2. The pretreatment process according to claim 1 wherein said epoxy resin mixture is the tetrafunctional epoxide of 4,4′-methylenedianiline, a modifying epoxy, 4,4′-diaminodiphenylsulfone, and $BF_3$ mono-ethylamine.
3. The pretreatment process according to claim 1 wherein said temperature is between about 140° C and about 160° C.
4. The pretreatment process according to claim 1 wherein said period of time is between 30 minutes and about 90 minutes.
5. The pretreatment process according to claim 1 wherein said exotherm corresponds to a residual reactivity from about 40% to about 60%.
6. The pretreatment process according to claim 5 wherein said exotherm corresponds to a residual reactivity of 50%.
7. A process for fabricating advanced graphite fiber/epoxy composite articles which comprises the steps of:
heating a plurality of plies of an epoxy resin mixture, said mixture comprising an epoxy resin base and reinforcing fibers, to an elevated first temperature for a period of time necessary to form a stabilized material yet retaining a sufficient exotherm, said exotherm being such that the heat generated upon subsequent processing will lower the viscosity of said stabilized material, said lowering necessary for consolidation and final cure;
stacking said plies of stabilized epoxy resin material to form a laminated stabilized epoxy resin material;
heating said laminated stabilized epoxy resin material under superatomospheric pressure to a second temperature for a second period of time to form a post-cured crosslinked advanced graphite fiber/epoxy composite article by consolidating the plies;
wherein the composite article so formed has a reduced in-press fabrication time.
8. The pretreatment process according to claim 7 wherein said epoxy resin mixture is the tetrafunctional epoxide of 4,4′-methylenedianiline, a modifying epoxy, 4,4′-diaminodiphenylsulfone, and $BF_3$ mono-ethylamine.
9. The process according to claim 7 wherein said first elevated temperature is between about 140° C and about 160° C.
10. The process according to claim 7 wherein said first time is between about 60 minutes and about 90 minutes.
11. The process according to claim 7 wherein said epoxy resin is heated to an elevated first temperature between about 140° C and about 160° C for a period of time between about 60 minutes and about 90 minutes.
12. The process according to claim 7 wherein said epoxy resin is heated to a second temperature between about 175° C and about 225° C for a period of time between about 1/2 hour and about 1 hour.

13. The process according to claim 7 wherein said resin or prepreg is heated to a first temperature between about 140° C and about 160° C for a period of time between about 60 minutes and about 90 minutes and said resin or prepreg is further heated to a second temperature between about 175° C and about 225° C for a period of time between about 1/2 hour and about 1 hour.

14. A process for fabricating advanced graphite fiber/epoxy composite articles which comprises the steps of:

stacking a plurality of plies of an epoxy resin mixture, said mixture comprising an epoxy resin base and reinforcing fibers, to form a laminated epoxy resin;

heating the laminated epoxy resin mixture to an elevated first temperature for a period of time necessary to form a stabilized material yet retaining a sufficient exotherm, said exotherm being such that the heat generated upon subsequent processing will lower the viscosity of said stabilized material, said lowering necessary for consolidation and final cure; and

heating said stabilized laminated epoxy resin material under superatomospheric pressure to a second temperature for a second period of time to form a post-cured crosslinked advanced graphite fiber/epoxy composite article by consolidating the plies,

wherein the composite article so formed has a reduced in-press fabrication time.

15. The pretreatment process according to claim 14 wherein said epoxy resin base is the tetrafunctional epoxide of 4,4′-methylenedianiline, a modifying epoxy, 4,4′-diaminodiphenylsulfone, and $BF_3$ mon-oethylamine.

16. The process according to claim 14 wherein said first elevated temperature is between about 140° C and about 160° C.

17. The process according to claim 14 wherein said first time is between about 60 minutes and about 90 minutes.

18. The process according to claim 14 wherein said epoxy resin is heated to an elevated first temperature between about 140° C and about 160° C for a period of time between about 60 minutes and about 90 minutes.

19. The process according to claim 14 wherein said epoxy resin is heated to a second temperature between about 175° C and about 225° C for a period of time between about 1/2 hour and about 1 hour.

20. The process according to claim 14 wherein said resin or prepreg is heated to a first temperature between about 140° C and about 160° C for a period of time between about 60 minutes and about 90 minutes and said resin or prepreg is further heated to a second temperature between about 175° C and about 225° C for a period of time between about 1/2 hour and about 1 hour.

FIG. 1

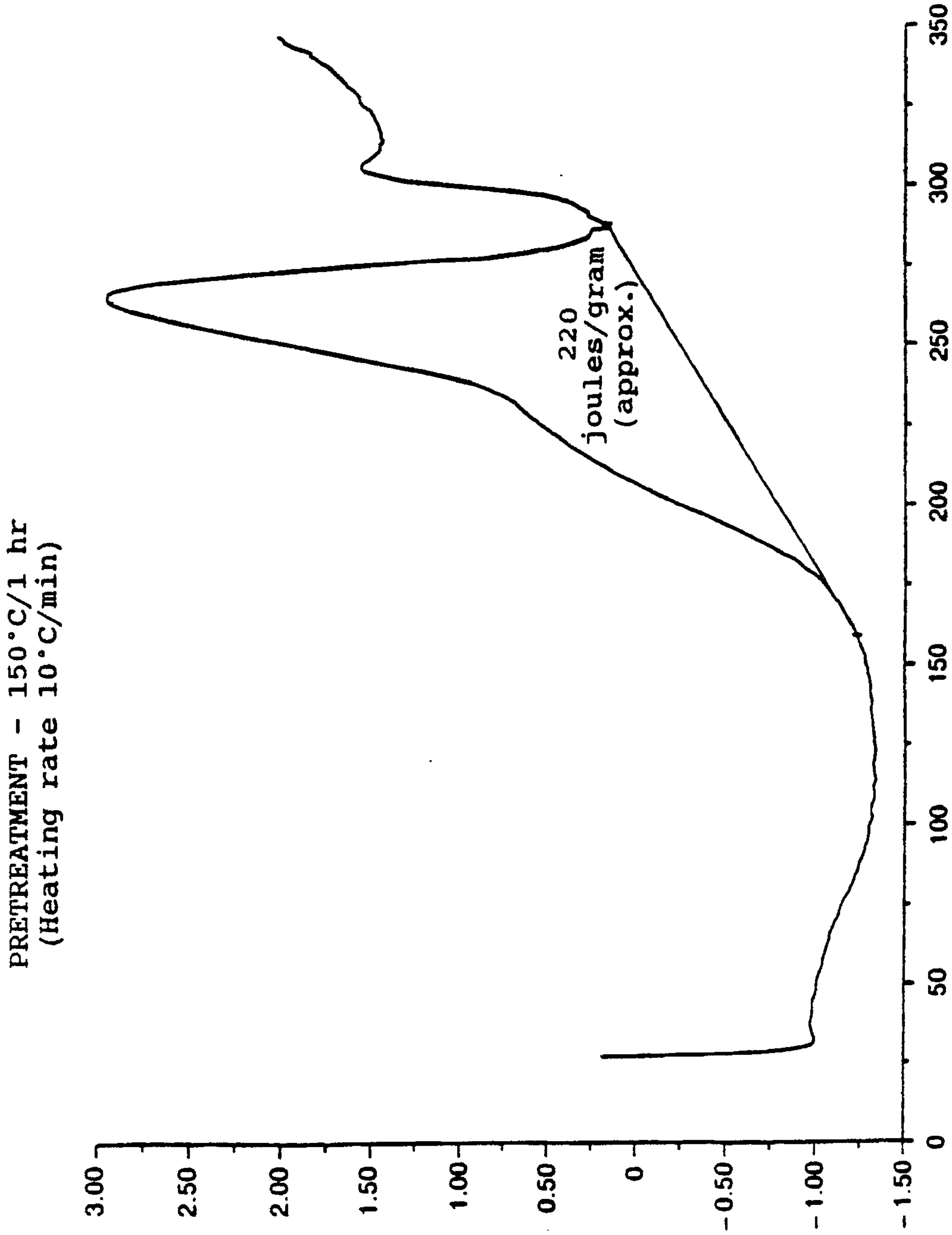
PRETREATMENT - 150°C/1 hr
(Heating rate 10°C/min)
220
joules/gram
(approx.)
3.00
2.50
2.00
1.50
1.00
0.50
0
-0.50
-1.00
-1.50
0
50
100
150
200
250
300
350

*FIG. 2*

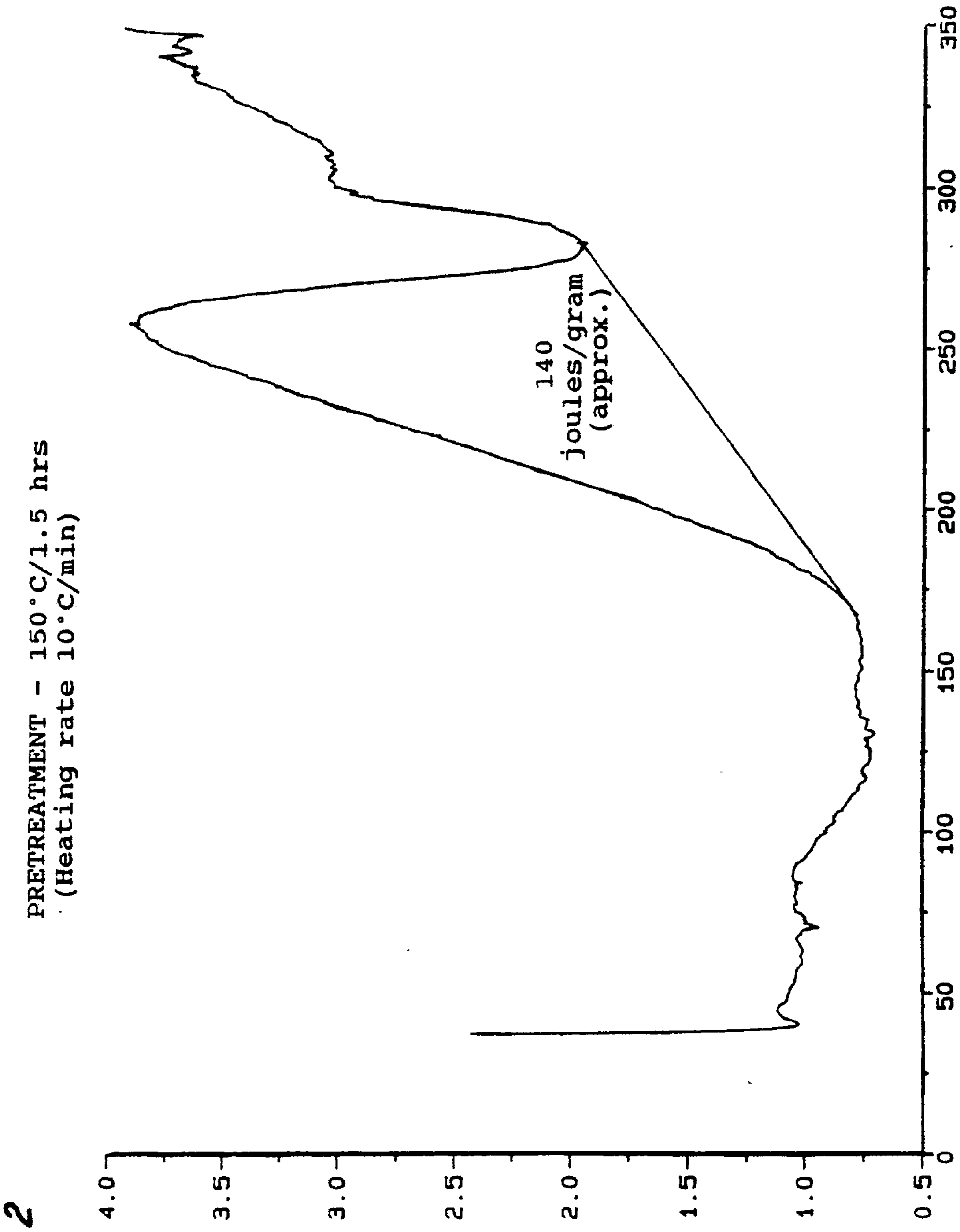
PRETREATMENT - 150°C/1.5 hrs
(Heating rate 10°C/min)
140
joules/gram
(approx.)
4.0
3.5
3.0
2.5
2.0
1.5
1.0
0.5
0
50
100
150
200
250
300
350